# FASCICULE DE BREVET EUROPEEN

(11) **EP 3 710 387 B1**
(45) Date de publication et mention de la délivrance du brevet: **23.09.2026**
(21) Numéro de dépôt: 18816184.8
(22) Date de dépôt: 14.11.2018
(51) Int. Cl.: B65G 61/00, B65G 57/00

(54) **DISPOSITIF DE PALETTISATION ROBOTISEE MUNI D'UN MAGASIN D'INTERCALAIRES**
ROBOTISIERTE PALETTIERVORRICHTUNG MIT EINEM SEPARATORSPEICHER
ROBOTISED PALLETISATION DEVICE PROVIDED WITH A SEPARATOR STORE

(30) Priorité: 16.11.2017 FR 1760797; 24.11.2017 FR 1761168
(43) Date de publication de la demande: 23.09.2020
(73) Titulaire: SIDEL PARTICIPATIONS, 76930 Octeville-sur-Mer (FR)
(72) Inventeur: MARLOT, Florian, 85290 Saint-laurent-sur-sevre (FR); RAGAIN, Davy, 85290 Saint-laurent-sur-sevre (FR)
(74) Mandataire: Sidel Group
(86) Numéro de dépôt international: PCT/FR2018/052825
(87) Numéro de publication internationale: WO 2019/097155

(56) Documents cités:
- DE-A1- 102005 060 452
- DE-A1- 3 417 736
- DE-U1- 9 410 447
- JP-A- 2008 213 920
- JP-A- S58 188 241
- JP-B2- 3 618 490
- US-A- 5 141 274

## Description

La présente invention relève du domaine de la palettisation de produits dans une ligne de production industrielle à la chaîne, et a pour objet, d'une part, un système de palettisation, et, d'autre part, un procédé mettant en œuvre ce système.

Plus particulièrement, l'invention concerne notamment les lignes dont la cadence de palettisation est telle qu'un humain peut s'en occuper manuellement par dépose l'un après l'autre des produits sur une palette, ainsi que des intercalaires séparant les couches de produits. Cette opération est exécutée aujourd'hui manuellement, jusqu'à l'obtention d'une palette pleine, présentant une superposition de couches séparées entre elles par des intercalaires, chaque couche comprenant plusieurs produits ou colis. Ce genre de lignes doit généralement respecter des conditions d'espace au sol réduit, et éviter tout risque pour les opérateurs qui travaillent et circulent sur la ligne.

Il existe aujourd'hui pour ces applications de lignes à basse cadence le besoin de trouver des solutions qui limitent le recours à des opérateurs, tant pour des raisons de sécurité, de santé, de fiabilité et répétabilité que de coût d'exploitation global.

Des machines de palettisation utilisant un robot multiaxes pour saisir des intercalaires et les déposer sur une palette sur laquelle des produits sont amoncelés en couches successives, sont déjà connues de l'art antérieur. Par exemple, EP2837586 décrit une telle machine de palettisation. La machine dispose d'un robot muni d'un bras de pivotement pour saisir des intercalaires et des palettes vides circulant sur un même convoyeur, et les déposer sur un convoyeur adjacent afin de procéder à la palettisation. La machine comporte en outre une colonne de palettisation munie d'une tête de préhension pour saisir des produits à palettiser et les déposer en couches successives sur une palette. Un inconvénient majeur reste qu'une telle solution robotique représente un investissement conséquent par rapport auquel un travail manuel est bien plus rentable. De plus, compte tenu des conditions de sécurité, de tels robots doivent être entourés par des enceintes fermées, avec des conditions d'accès. En effet, leurs mouvements et leur dimensionnement les rendent dangereux pour des humains, en particulier à cause des chocs possibles. En outre, une telle solution à base de deux convoyeurs présente également l'inconvénient d'être peu flexible et adaptable en fonction des besoins de production, qui peuvent nécessiter des flux différents à chaque lot.

On connait également des solutions utilisant plusieurs robots pour saisir des produits et des intercalaires et les déposer par couches successives sur une palette. De telles solutions disposent généralement d'un ou plusieurs magasins d'intercalaires disposés à proximité des robots. Par exemple, WO2016199063 décrit un système de palettisation comportant des robots pour saisir les produits sur un convoyeur et les déposer par couches sur une palette, ainsi que des robots pour saisir des intercalaires et les déposer entre les couches de produits sur la palette en formation. Ces derniers robots saisissent les intercalaires dans deux magasins d'intercalaires disposés à proximité des robots. Un tel équipement est particulièrement adapté pour des produits débités à une cadence bien plus élevée et est donc très largement surdimensionné et donc trop onéreux pour des cadences plus faibles. En outre, l'encombrement au sol est bien trop important pour des lignes basse cadence.

On connaît également un dispositif de palettisation de plaques de verre, divulgué dans le document DE102005060452. Ce document divulgue un système de palettisation selon le préambule de la revendication 1. En particulier, le document décrit un dispositif de manutention de matériaux plats de type générique, dans lequel le châssis support peut pivoter entre une position verticale et une position horizontale de l'aile.

Un autre inconvénient de ce type de système de palettisation est que les magasins d'intercalaires sont relativement encombrants et participent de l'encombrement général de l'installation. En effet, le stockage des intercalaires dans ces magasins est effectué selon un plan sensiblement horizontal, par empilement des intercalaires les uns sur les autres, pour faciliter leur dépose ultérieure sans changement d'orientation spatiale.

Dans ce domaine de la palettisation de produits en couches superposées séparées par des intercalaires et comprenant, chacune, plusieurs produits, il existe donc aujourd'hui un besoin d'améliorer l'existant décrit ci-dessus, en proposant un équipement qui permette de réduire l'encombrement de la ligne basse cadence, tout en limitant le recours à des opérateurs, ladite solution étant autant que possible simple, peu onéreuse, adaptable et/ou de fonctionnement fiable et fluide.

L'invention a ainsi pour objet un système de palettisation selon la revendication 1 et un procédé de palettisation selon la revendication 11.

L'invention sera mieux comprise grâce à la description ci-dessous, qui se base sur des modes de réalisation possibles, expliqués de façon illustrative et nullement limitative. Il est fait référence à des figures qui ne sont pas annexées. Même si les figures ne sont pas annexées, les références aux figures sont indicatives de modes de réalisation. En particulier, il est fait référence à des figures dans lesquelles :
- la figure 1 montre un magasin d'intercalaires dans un premier mode de réalisation ;
- la figure 2 montre un magasin d'intercalaires dans un deuxième mode de réalisation ;
- la figure 3 est une vue en perspective qui montre un système de palettisation avec une partie d'un convoyeur de produits et un dispositif de palettisation, le dispositif de palettisation comprenant un robot et un magasin d'intercalaires ;
- la figure 4 est une vue en perspective du système de palettisation de la figure 3, prise selon un point de vue opposé ; et
- la figure 5 est une vue de dessus du système de palettisation de la figure 3.

Un mode de réalisation comprend un dispositif de palettisation 1 comprenant, d'une part, pour saisir et déplacer des produits 2 à palettiser et des intercalaires 3 à insérer entre des couches de produits 2, un robot 4, et, d'autre part, pour recevoir les intercalaires 3, un magasin d'intercalaires 6. Les figures 3 à 5 illustrent un système de palettisation 8 comprenant le dispositif 1 et un convoyeur 10 de produits 2 à palettiser situé en amont du robot 4 par rapport à la direction d'avancement des produits 2. Le convoyeur 10 est typiquement un convoyeur à bandes ou à rouleaux.

Les produits 2 sont préférablement disposés sur une palette 12 sous forme de plusieurs couches superposées séparées par des intercalaires 3, chaque couche présentant plusieurs produits 2. De façon générale, les produits 2 peuvent être du type boîte, caisse, ou autres. Les intercalaires 3 sont par exemple des feuilles cartonnées.

Selon l'invention, le robot 4 est un robot multiaxes librement accessible. En pratique, cela signifie que le dispositif 1 est dépourvu de parois ou grillages interdisant ou restreignant l'accès au robot 4. Bien que le dispositif 1 puisse présenter des parois autour du robot 4, ce dernier n'est pas dans une zone de travail entièrement close dont l'accès est contrôlé. Le robot 4 évolue donc dans une zone de travail accessible à tout opérateur intervenant sur la ligne. Le dispositif de palettisation 1 est ainsi dépourvu d'un enclos fermé de sécurité, à l'intérieur duquel seul des opérateurs autorisés peuvent circuler. Ce genre de robot 4 dit collaboratif est accessible par n'importe qui, sans avoir à ouvrir au préalable la cage dans laquelle un robot non collaboratif travaille et souvent délimitée par des grillages de sécurité.

Le robot 4 est donc positionné hors d'une enceinte de sécurité close, voire à accès restreint et/ou contrôlé. Une telle enceinte de sécurité aurait normalement pour fonction de sécuriser précisément la zone de travail du robot et d'éviter que n'importe quel opérateur pénètre la zone de travail. Des accès à clé, carte, code, ou autres sont possibles. Dans l'invention, la zone de travail du robot 4 est accessible par tout opérateur et le robot 4 est intrinsèquement sécurisé, sans risque pour les personnes de l'environnement.

Dans certaines applications, le robot 4 peut travailler à une vitesse suffisamment faible pour que sa vitesse ne soit pas dangereuse pour les opérateurs autour de lui. Dans ces cas, la cadence du robot n'est pas nécessairement ajustée à la détection d'une présence autour de lui, et le dispositif peut être dépourvu d'un système de détection de l'environnement du robot 4. Dans d'autres configurations, le robot 4 est amené à travailler à des cadences qui représentent des éventuels risques pour un opérateur que le robot viendrait heurter lors d'un mouvement. Dans ces cas, comme le robot 4 est hors d'une enceinte close et que des opérateurs peuvent alors circuler dans sa zone de travail, le dispositif 1 est préférablement muni d'un système de surveillance de la zone de travail du robot 4, ce système ayant pour but de signaler une présence dans la zone de travail dans le but de modifier la vitesse de fonctionnement du robot 4.

Selon l'invention encore, le magasin d'intercalaires 6 est configuré pour présenter les intercalaires 3 selon un plan d'amenée Pa orienté oblique vers le haut par rapport au plan Ps du sol. On réduit alors significativement la surface projetée au sol du dispositif 1, limitant ainsi l'encombrement au sol de ce dernier et améliorant la compacité de l'ensemble. Il devient ainsi avantageux d'utiliser un robot aux dimensions réduites, tel qu'un robot multiaxes librement accessible. En outre, l'association entre un robot multiaxes librement accessible et un magasin d'intercalaires qui présente les intercalaires selon un plan d'amenée orienté oblique vers le haut facilite l'adaptabilité de la ligne de palettisation et lui confère une grande flexibilité. Ceci améliore notablement la fluidité du procédé de palettisation. Par « orienté oblique vers le haut », on entend dans la présente description que le plan d'amenée Pa des intercalaires 3 est sensiblement vertical par rapport au plan Ps du sol, ou encore que le plan d'amenée Pa forme un angle avec le plan Ps du sol compris entre 45 degrés et 90 degrés. Le magasin 6 est tel que, une fois placé au-delà du robot 4 dans le prolongement de la direction de déplacement des produits, les intercalaires sont préférablement orientés avec une tranche qui s'étend horizontalement dans cette direction. Préférablement, mais sans que cela ne soit limitatif dans le cadre de la présente invention, le plan d'amenée Pa forme un angle avec le plan Ps du sol sensiblement égal à 75 degrés. En effet, une telle valeur d'angle présente l'avantage de conférer une surface projetée au sol très faible pour l'ensemble magasin 6 / intercalaires 3, tout en permettant un maintien en place très stable pour les intercalaires 3 dans le magasin 6 ainsi qu'un accès aisé pour le robot 4.

Le robot 4 est positionné entre le magasin d'intercalaires 6 et le convoyeur 10 de produits à palettiser de sorte à définir un alignement selon une première direction D1. Cette première direction D1 correspond sensiblement à la direction d'avancement des produits 2. Autrement dit, le magasin d'intercalaires 6 est situé en aval du robot 4 par rapport à la direction d'avancement des produits 2, l'ensemble convoyeur / robot / magasin d'intercalaires étant aligné dans cet ordre. Cette configuration permet de réduire encore l'encombrement du système de palettisation 8, tout en facilitant le travail du robot collaboratif 4. En effet, le robot 4 peut continuer à travailler malgré le passage d'opérateurs le long de la ligne de palettisation, sans gêner ces derniers.

Selon une caractéristique additionnelle possible, l'ensemble magasin 6 / intercalaires 3 présente une surface projetée au sol dont la largeur par rapport à la première direction D1 n'excède pas la largeur d'un socle 14 du robot 4 par rapport à la première direction. La largeur est ici entendue comme la dimension prise dans le plan horizontal, perpendiculairement à la première direction D1. Le robot 4 présente en effet, de préférence, un socle 14 et un ensemble de bras 16 monté mobile sur le socle 14. L'ensemble de bras 16 peut être muni d'une tête 18, par exemple une tête à ventouse, pour saisir et déplacer les produits 2 et les intercalaires 3. Cette configuration en largeur projetée au sol de l'ensemble magasin 6 / intercalaires 3 est par exemple illustrée sur la figure 5. Une telle configuration permet de réduire encore l'encombrement du dispositif 1, et permet à un opérateur de venir installer une palette vide ou chercher une palette pleine en la manipulant le long du robot 4 sans être gêné par l'ensemble magasin 6 / intercalaires 3.

Dans certains modes de réalisation particuliers, le dispositif 1 présente, à côté du robot 4, une zone au sol qui peut recevoir au moins une palette 12. Une telle zone au sol forme alors une zone de palettisation. Ainsi, dans l'environnement du robot 4 collaboratif est prévu un espace où l'on peut déposer une palette 12 sur laquelle il sera possible de déposer des produits 2.

Selon une caractéristique additionnelle possible, le dispositif 1 présente deux zones au sol pouvant chacune recevoir au moins une palette 12, les deux zones au sol s'étendant chacune d'un côté du robot 4. Le robot 4 est positionné entre les deux zones au sol de sorte à définir avec elles un alignement selon une seconde direction D2. Préférablement, la seconde direction D2 est sensiblement perpendiculaire par rapport à la direction d'avancement des produits 2, autrement dit par rapport à la première direction D1. Cette configuration, illustrée sur la figure 5, permet d'obtenir un dispositif 1 fonctionnant de manière extrêmement compacte avec deux zones de palettisation, formées par les deux zones au sol. Le nombre de robots 4 pouvant être mis en place dans une installation, par exemple dans une usine, peut ainsi être avantageusement augmenté au regard du faible encombrement de chacun d'eux.

Selon une autre caractéristique additionnelle possible, le socle 14 du robot 4 est muni, sur au moins un côté, d'un moyen 20 de référencement de palettes 12 au niveau du socle 14. Préférablement, le moyen de référencement 20 comprend une butée faisant saillie depuis un côté du socle 14, contre laquelle la palette 12 d'une zone de palettisation vient s'appuyer. Dans le mode de réalisation selon lequel le dispositif 1 présente, deux zones de palettisation s'étendant chacune d'un côté du robot 4, le socle 14 du robot 4 peut comprendre deux butées, faisant saillie depuis des côtés opposés du socle 14. Le référencement des palettes 12 est réalisé dans le plan horizontal, avec les palettes 12 plaquées contre le bord du socle 14 qui s'étend dans la première direction D1, de sorte que le robot 4 n'a pas besoin de détecter la position horizontale exacte de la palette 12 à traiter. Grâce au moyen de référencement 20, le référencement des palettes est réalisé selon la direction d'avancement des produits 2, autrement dit selon la première direction D1. En outre, les palettes 12 viennent également en appui contre le côté du socle 14 depuis lequel le moyen 20 fait saillie, ce qui permet un référencement selon la seconde direction D2. Les palettes 12 sont ainsi plaquées contre le socle 14 du robot 4, ce qui permet notamment de faciliter la circulation des palettes 12 le long de la ligne de palettisation.

Selon une autre caractéristique additionnelle possible, le socle 14 du robot 4 est muni de moyens de déplacement du robot 4 par rapport au sol. Dans des modes de réalisation particuliers, les moyens de déplacement comprennent au moins une alvéole de réception d'un outil du type transporteur à fourches. Les moyens de déplacement peuvent par exemple comprendre une alvéole apte à recevoir deux fourches parallèles d'un chariot à fourches, ou encore deux alvéoles recevant chacune une fourche d'un tel chariot. Selon un mode de réalisation préféré, le robot 4 et le magasin 6 sont déplacés séparément mais avec le même moyen de déplacement. Alternativement, l'ensemble robot 4 / magasin 6 peut être solidarisé au niveau du socle 14 du robot 4. Cela permet de pouvoir déplacer aisément l'ensemble robot 4 / magasin 6 en une seule opération, par exemple vers une autre ligne de palettisation.

Le robot se présente préférablement sous la forme d'un socle 14 à partir duquel s'étend une succession de bras et/ou leviers formant un actionneur multiaxes. Dans certains modes de réalisation, le robot 4 est muni de moyens de réglage en fonctionnement dans la direction verticale. Par exemple, le socle 14 peut être de hauteur variable, par exemple télescopique, ce qui permet alors d'ajuster la position en hauteur la position de l'actionneur multi-axes, et ainsi d'ajuster verticalement sa zone d'action.

Dans d'autres modes de réalisation particuliers, le magasin d'intercalaires 6 est muni de moyens 24 de déplacement du magasin 6 par rapport au robot 4, de sorte que le magasin d'intercalaires 6 forme un chariot mobile.

Selon un premier mode de réalisation, les moyens 24 de déplacement par rapport au robot 4 comprennent au moins une alvéole 26 de réception d'une fourche d'un outil du type transporteur à fourches. Comme représenté à la figure 1, les moyens de déplacement 24 peuvent comprendre deux alvéoles 26 recevant chacune une fourche d'un chariot à fourches. En variante non représentée, les moyens de déplacement 24 peuvent comprendre une alvéole en forme de « U » apte à recevoir deux fourches parallèles d'un chariot à fourches.

Selon un deuxième mode de réalisation, les moyens 24 de déplacement par rapport au robot 4 comprennent au moins une roulette 28 montée sous le magasin d'intercalaires 6. Comme représenté à la figure 2, les moyens de déplacement 24 comprennent par exemple quatre roulettes 28 montées sous le magasin 6, pour permettre de déplacer le magasin 6 relativement au robot 4. Selon ce deuxième mode de réalisation, le magasin 6 est muni également d'un guidon 30 de préhension par un opérateur.

Selon une caractéristique additionnelle possible, le magasin d'intercalaires 6 comprend en outre des moyens 32 d'engagement mécanique dans le robot 4, et le robot 4 est muni de moyens de réception 34 aptes à coopérer avec lesdits moyens d'engagement mécanique 32. Ceci permet de guider et d'assurer un bon positionnement du magasin 6 vis-à-vis du robot 4, afin de garantir au robot 4 une précision dans la saisie des intercalaires 3.

Selon une autre caractéristique additionnelle possible, les moyens 32 d'engagement mécanique dans le robot 4 comportent au moins une langue 33 d'engagement, et les moyens de réception 34 comportent au moins une alvéole 35 de réception de la langue 33.

Selon une autre caractéristique additionnelle possible, le magasin d'intercalaires 6 comprend en outre des moyens 36 de maintien en position du magasin 6 relativement au robot 4. Ceci permet de maintenir le magasin 6 en place pendant le temps d'un cycle de palettisation, sans risquer de mouvement inopportun du magasin durant cette opération. Dans certaines réalisations, les moyens de maintien en position 36 sont par exemple formés de marquages au sol offrant au magasin 6 une adhérence accrue avec le sol. Durant les cycles de palettisation, le magasin 6 est déposé sur le sol de manière à venir au contact de ces marquages. Dans d'autres réalisations, les moyens de maintien en position 36 comprennent par exemple au moins un frein mécanique 38 de roulette 28. Un tel frein mécanique 38 est actionnable entre deux positions : une position de freinage dans laquelle le frein 38 est en contact frictionnel avec la roulette 28, et une position libre dans laquelle le frein 38 est dégagé de la roulette 28. De façon préférée, c'est le poids du robot 4 lui-même qui en assure le maintien de la position au sol, sur lequel il repose préférablement directement, les mouvements du robot 4 étant tels qu'ils ne déstabilisent pas l'ensemble.

Dans certains modes de réalisation, le magasin d'intercalaires 6 comprend une structure 40 de réception des intercalaires 3, ladite structure 40 comportant une portion supérieure 41 de maintien en position sensiblement verticale des intercalaires 3, ladite portion de maintien 41 définissant un plan P1 parallèle au plan d'amenée des intercalaires 3. La structure de réception 40 est par exemple formée d'un châssis 42, d'une armature métallique 43 montée sur le châssis 42, et d'un fond 44 aménagé dans le châssis 42. L'armature métallique 43 comprend la portion supérieure 41, et une portion inférieure 46. Le fond 44 est sensiblement perpendiculaire à la portion inférieure 46. Dans certains modes de réalisation, tel que par exemple celui illustré à la figure 2, la portion inférieure 46 est verticale et définit un angle avec la portion supérieure 41, cet angle étant l'angle complémentaire de l'angle formé entre le plan d'amenée Pa et le plan Ps du sol. Dans cet exemple de réalisation particulier de la figure 2, la portion supérieure 41 forme un plan incliné, et les intercalaires 3 viennent prendre appui en position oblique vers le haut contre ce plan incliné et contre le fond 44.

Le fond 44 présente par exemple une forme de cuvette pour permettre le bon positionnement et le maintien en place des intercalaires 3 au sein du magasin 6.

Selon une caractéristique additionnelle possible, le magasin d'intercalaires 6 est muni d'au moins une butée 48 de référencement des intercalaires 3 dans une direction longitudinale. La direction longitudinale est ici la première direction D1, autrement dit la direction d'avancement des produits 2. La butée de référencement 48 est typiquement fixée sur le châssis 42, du côté du magasin 6 destiné à venir au contact du socle 14 du robot 4. La butée de référencement 48 est par exemple formée d'une languette en tôle, contre laquelle les intercalaires 3 viennent en appui par leur tranche. Le référencement des intercalaires 3 est réalisé selon la direction d'avancement des produits 2, autrement dit selon la première direction D1, de sorte que le robot 4 n'a pas besoin de détecter la position longitudinale exacte de l'intercalaire 3 à traiter.

Outre les avantages précédemment évoqués, l'invention présente également les caractéristiques et/ou avantages additionnels suivants :
- le dispositif peut indifféremment fonctionner avec une ou deux zones de palettisation. Lorsqu'il fonctionne avec deux zones de palettisation, un avantage additionnel est que le dispositif peut fonctionner en continu, un opérateur remplaçant une palette pleine par une palette vide sur une des zones de palettisation, pendant que la palette sur l'autre zone continue à être chargée ;
- le dispositif ne nécessite pas d'actionneur supplémentaire dédié à la pose des intercalaires ;
- le robot multiaxes peut travailler avec des dimensions différentes de palettes et d'intercalaires ;
- le robot peut travailler dans un espace de travail très limité, notamment du fait du très faible encombrement du magasin d'intercalaires. Le magasin d'intercalaires est en outre suffisamment fin pour un bon empattement du système et pour un bon accès aux palettes d'un côté et de l'autre du robot ;
- le robot peut avantageusement poser des intercalaires très hauts sur les palettes, le dispositif pouvant par exemple fonctionner avec des palettes chargées présentant une hauteur jusqu'à environ 1,9 m.

Cette hauteur peut être encore augmentée avec le recours à un réglage dans la direction verticale ;
- l'amenée des intercalaires dans le magasin d'intercalaires est fiable, de par la configuration de stockage des intercalaires dans le magasin ;
- le stockage des intercalaires peut être mobile, grâce aux moyens de déplacement du magasin d'intercalaires, ce qui peut permettre par exemple d'amener facilement le magasin sur une autre ligne de palettisation.

Un mode de réalisation comprend un procédé mettant en œuvre le dispositif tel que décrit ci-dessus, à savoir un procédé de palettisation à l'aide d'un robot multiaxes 4 travaillant dans une zone libre d'accès, comprenant des étapes consistant essentiellement à, d'une part, saisir l'un après l'autre des produits 2 sur une zone de réception de produits 2, et, d'autre part, déplacer les produits 2 saisis et les déposer sur une palette 12 de manière à former des couches de produits.

En particulier, la zone de réception de produits 2 se situe à l'extrémité aval du convoyeur à bandes ou rouleaux 10. Le procédé revient à palettiser des produits 2 délivrés en continu par une ligne de production sous la forme d'une superposition de couches comprenant chacune plusieurs produits 2 l'un à côté de l'autre.

Selon l'invention, le procédé comprend une étape consistant à saisir l'un après l'autre des intercalaires 3, dans un magasin d'intercalaires 6 configuré pour présenter les intercalaires 3 selon un plan d'amenée Pa orienté oblique vers le haut par rapport au plan Ps du sol, et une étape consistant à déposer chaque intercalaire 3 saisi sur une couche de produits 2 de la palette 12, de manière à ce que chaque intercalaire 3 sépare deux couches de produits 2 sur la palette 12, jusqu'à obtention d'une palette complète. Typiquement, le robot multiaxes 4 saisit un intercalaire 3 après chaque formation d'une couche de produits 2 sur la palette 12, puis vient déposer cet intercalaire sur la couche de produits avant de reprendre les étapes de saisie et de dépose des produits 2 afin de former la couche suivante.

Selon une caractéristique additionnelle possible du procédé, la position de saisie d'un intercalaire 3 par le robot 4 peut être détectée par celui-ci par l'apparition d'une résistance prédéterminée à l'occasion d'un mouvement d'avancement de la tête 18 du robot 4 vers la portion supérieure 41 de maintien du magasin 6, ce mouvement d'avancement ayant une composante horizontale. La résistance au mouvement de la tête 18 du robot 4 peut en effet être détectée par le robot 4 lui-même. Ainsi, dès que le robot 4 rencontre une résistance assimilable à la présence d'un obstacle, on peut considérer qu'un intercalaire 3 est présent et que la position de saisie de l'intercalaire par le robot 4 est détectée. Cette détection est possible d'une part grâce au référencement du magasin 6 contre le socle 14 du robot 4, et donc grâce aux moyens d'engagement mécanique 32 ; et d'autre part grâce au référencement des intercalaires 3 dans le magasin 6. Cela évite au robot 4, à chaque saisie d'intercalaire 3, de devoir scanner toute la pile d'intercalaires 3 pour savoir où en est la pile.

Les produits 2 et les intercalaires 3 sont saisis et déplacés à l'unité, et le remplissage d'une palette 12 consiste donc en une opération cyclique, au cours de laquelle plusieurs couches successives séparées par des intercalaires sont créées, chaque couche étant formée de plusieurs produits 2 l'un à côté de l'autre, notamment avec une orientation différente de l'un par rapport à l'autre, par exemple avec une rotation d'au moins un quart de tour.

Bien que la description ci-dessus se base sur des modes de réalisation particuliers, elle n'est nullement limitative de la portée de l'invention, et des modifications peuvent être apportées dans les limites de l'invention telle que définie dans les revendications.

## Revendications

1. Système de palettisation (8), comprenant
a. un dispositif de palettisation (1) comprenant, d'une part, un moyen (4) pour saisir et déplacer des produits (2) à palettiser et des intercalaires (3) à insérer entre des couches de produits à palettiser, et, d'autre part, pour recevoir les intercalaires (3), un magasin d'intercalaires (6), le moyen (4) pour saisir et déplacer des produits (2) à palettiser et des intercalaires (3) étant un robot multiaxes librement accessible, et le magasin d'intercalaires (6) étant configuré pour présenter les intercalaires (3) selon un plan d'amenée (Pa) orienté oblique vers le haut par rapport au plan du sol (Ps), et
b. un convoyeur (10) de produits (2) à palettiser situé en amont du robot (4) par rapport à la direction d'avancement des produits (2), **caractérisé en ce que**
le magasin d'intercalaires (6) est situé en aval du robot (4) par rapport à la direction d'avancement des produits (2), l'ensemble convoyeur (10) / robot (4) / magasin d'intercalaires (6) étant aligné dans cet ordre,
le robot étant positionné entre le magasin d'intercalaires (6) et le convoyeur (10) de produits de sorte à définir un alignement selon une première direction (D1), cette première direction correspondant sensiblement à la direction d'avancement des produits (2).

2. Système de palettisation (8) selon la revendication 1, où le plan d'amenée (Pa) des intercalaires (3) forme un angle avec le plan du sol (Ps) compris entre 45 degrés et 90 degrés, de préférence sensiblement égal à 75 degrés.

3. Système de palettisation (8) selon la revendication 1 ou 2, où l'ensemble magasin / intercalaires présente une surface projetée au sol dont la largeur par rapport à une direction (D1) d'alignement entre le robot (4) et le magasin d'intercalaires (6) n'excède pas la largeur d'un socle (14) du robot (4) par rapport à ladite direction d'alignement (D1).

4. Système de palettisation (8) selon l'une quelconque des revendications précédentes, où le robot (4) comprend un socle (14) muni, sur au moins un côté, d'un moyen (20) de référencement de palettes (12) au niveau du socle (14).

5. Système de palettisation (8) selon l'une quelconque des revendications précédentes, où le robot (4) comprend un socle (14) muni de moyens de déplacement du robot (4) par rapport au sol.

6. Système de palettisation (8) selon l'une quelconque des revendications précédentes, où le magasin d'intercalaires (6) est muni de moyens (24) de déplacement du magasin (6) par rapport au robot (4), de sorte que le magasin d'intercalaires (6) forme un chariot mobile.

7. Système de palettisation (8) selon la revendication 6, où les moyens (24) de déplacement par rapport au robot (4) comprennent au moins une alvéole (26) de réception d'une fourche d'un outil du type transporteur à fourches.

8. Système de palettisation (8) selon l'une quelconque des revendications précédentes, où le magasin d'intercalaires (6) comprend en outre des moyens (32) d'engagement mécanique dans le robot (4), et où le robot (4) est muni de moyens de réception (34) aptes à coopérer avec lesdits moyens d'engagement mécanique (32).

9. Système de palettisation (8) selon l'une quelconque des revendications précédentes, où le magasin d'intercalaires (6) comprend une structure (40) de réception des intercalaires (3), ladite structure (40) comportant une portion supérieure (41) de maintien en position sensiblement verticale des intercalaires (3), ladite portion de maintien (41) définissant un plan (P1) parallèle au plan d'amenée des intercalaires (Pa).

10. Système de palettisation (8) selon l'une quelconque des revendications précédentes, où le magasin d'intercalaires (6) est muni d'au moins une butée (48) de référencement des intercalaires dans une direction longitudinale (D1).

11. Procédé de palettisation, mettant en œuvre un système de palettisation (8) selon l'une quelconque des revendications 1 à 10, à l'aide d'un robot multiaxes (4) travaillant dans une zone libre d'accès, comprenant des étapes consistant essentiellement à, d'une part, saisir l'un après l'autre des produits (2) sur une zone de réception de produits, et, d'autre part, déplacer les produits (2) saisis et les déposer sur une palette (12) de manière à former des couches de produits, les produits (2) étant du type boîte ou caisse,
procédé **caractérisé en ce que**
il comprend une étape consistant à saisir l'un après l'autre des intercalaires (3), lesdits intercalaires (3) étant de type feuilles cartonnées, dans un magasin d'intercalaires (6) configuré pour présenter les intercalaires (3) selon un plan d'amenée (Pa) orienté oblique vers le haut par rapport au plan du sol (Ps), et une étape consistant à déposer chaque intercalaire (3) saisi sur une couche de produits (2) de la palette (12), de manière à ce que chaque intercalaire (3) sépare deux couches de produits (2) sur la palette (12), jusqu'à obtention d'une palette complète.

## Patentansprüche

1. Palettiersystem (8), umfassend
a. eine Palettiervorrichtung (1), umfassend zum einen eine Einrichtung (4) zum Ergreifen und Versetzen von zu palettierenden Produkten (2) und von zwischen Lagen von zu palettierenden Produkten einzufügenden Zwischenlagen (3) und zum anderen, zum Aufnehmen der Zwischenlagen (3), ein Zwischenlagenmagazin (6), wobei die Einrichtung (4) zum Ergreifen und Versetzen von zu palettierenden Produkten (2) und von Zwischenlagen (3) ein frei zugänglicher mehrachsiger Roboter ist und wobei das Zwischenlagenmagazin (6) dazu ausgebildet ist, die Zwischenlagen (3) entlang einer Bezug auf die Bodenebene (Ps) schräg nach oben gerichteten Zuführebene (Pa) zu präsentieren, und
b. einen Förderer (10) für zu palettierende Produkte (2), der in Bezug auf die Vorschubrichtung der Produkte (2) dem Roboter (4) vorgelagert ist,
**dadurch gekennzeichnet, dass**
das Zwischenlagenmagazin (6) in Bezug auf die Vorschubrichtung der Produkte (2) dem Roboter (4) nachgelagert ist, wobei die Anordnung Förderer (10) / Roboter (4) / Zwischenlagenmagazin (6) in dieser Reihenfolge ausgerichtet ist,
wobei der Roboter zwischen dem Zwischenlagenmagazin (6) und dem Förderer (10) für Produkte positioniert ist, so dass eine Ausrichtung entlang einer ersten Richtung (D1) definiert wird, wobei diese erste Richtung im Wesentlichen der Vorschubrichtung der Produkte (2) entspricht.

2. Palettiersystem (8) nach Anspruch 1, wobei die Zuführebene (Pa) für die Zwischenlagen (3) mit der Bodenebene (Ps) einen Winkel zwischen 45 Grad und 90 Grad, vorzugsweise im Wesentlichen von 75 Grad, bildet.

3. Palettiersystem (8) nach Anspruch 1 oder 2, wobei die Anordnung Magazin / Zwischenlagen eine auf den Boden projizierte Fläche aufweist, deren Breite in Bezug auf eine Ausrichtungsrichtung (D1) zwischen dem Roboter (4) und dem Zwischenlagenmagazin (6) die Breite eines Sockels (14) des Roboters (4) in Bezug auf die Ausrichtungsrichtung (D1) nicht überschreitet.

4. Palettiersystem (8) nach einem der vorhergehenden Ansprüche, wobei der Roboter (4) einen Sockel (14) umfasst, der auf mindestens einer Seite mit einer Einrichtung (20) zum Referenzieren von Paletten (12) an dem Sockel (14) versehen ist.

5. Palettiersystem (8) nach einem der vorhergehenden Ansprüche, wobei der Roboter (4) einen Sockel (14) umfasst, der mit Einrichtungen zum Versetzen des Roboters (4) in Bezug auf den Boden versehen ist.

6. Palettiersystem (8) nach einem der vorhergehenden Ansprüche, wobei das Zwischenlagenmagazin (6) mit Einrichtungen (24) zum Versetzen des Magazins (6) in Bezug auf den Roboter (4) versehen ist, so dass das Zwischenlagenmagazin (6) einen fahrbaren Wagen bildet.

7. Palettiersystem (8) nach Anspruch 6, wobei die Einrichtungen (24) zum Versetzen in Bezug auf den Roboter (4) mindestens eine Einfahröffnung (26) zum Aufnehmen einer Gabel eines Werkzeugs vom Typ Gabelförderer umfassen.

8. Palettiersystem (8) nach einem der vorhergehenden Ansprüche, wobei das Zwischenlagenmagazin (6) ferner Einrichtungen (32) zum mechanischen Eingreifen in den Roboter (4) umfasst und wobei der Roboter (4) mit Aufnahmeeinrichtungen (34) versehen ist, die geeignet sind, mit den Einrichtungen (32) zum mechanischen Eingreifen zusammenzuwirken.

9. Palettiersystem (8) nach einem der vorhergehenden Ansprüche, wobei das Zwischenlagenmagazin (6) eine Struktur (40) zum Aufnehmen der Zwischenlagen (3) umfasst, wobei die Struktur (40) einen oberen Halteabschnitt (41) zum Halten der Zwischenlagen (3) in einer im Wesentlichen vertikalen Position beinhaltet, wobei der Halteabschnitt (41) eine Ebene (P1) parallel zu der Zuführebene für die Zwischenlagen (Pa) definiert.

10. Palettiersystem (8) nach einem der vorhergehenden Ansprüche, wobei das Zwischenlagenmagazin (6) mit mindestens einem Anschlag (48) zur Referenzierung der Zwischenlagen in einer Längsrichtung (D1) versehen ist.

11. Palettierverfahren unter Einsatz eines Palettiersystems (8) nach einem der Ansprüche 1 bis 10 mithilfe eines mehrachsigen Roboters (4), der in einem frei zugänglichen Bereich arbeitet, umfassend Schritte, die im Wesentlichen darin bestehen, zum einen Produkte (2) nacheinander in einem Produktaufnahmebereich zu ergreifen und zum anderen die ergriffenen Produkte (2) zu versetzen und auf einer Palette (12) abzusetzen, so dass Lagen von Produkten gebildet werden, wobei die Produkte (2) vom Typ Schachtel oder Kiste sind,
wobei das Verfahren **dadurch gekennzeichnet ist, dass**
es einen Schritt umfasst, der darin besteht, nacheinander Zwischenlagen (3), wobei die Zwischenlagen (3) vom Typ kartonierte Bögen sind, in einem Zwischenlagenmagazin (6) zu ergreifen, das dazu ausgelegt ist, die Zwischenlagen (3) entlang einer in Bezug auf die Bodenebene (Ps) schräg nach oben gerichteten Zuführebene (Pa) zu präsentieren, und einen Schritt, der darin besteht, jede ergriffene Zwischenlage (3) auf einer Lage von Produkten (2) der Palette (12) abzusetzen, so dass jede Zwischenlage (3) zwei Lagen von Produkten (2) auf der Palette (12) trennt, bis eine vollständige Palette erhalten wird.

## Claims

1. Palletizing system (8) comprising
a. a palletizing device (1) comprising both a means (4) for grasping and moving products (2) to be palletized and interlayers (3) to be inserted between layers of products to be palletized, and an interlayer magazine (6) for receiving the interlayers (3), the means (4) for grasping and moving products (2) to be palletized and interlayers (3) being a freely accessible multi-axis robot, and the interlayer magazine (6) being configured to present the interlayers (3) in a feed plane (Pa) oriented obliquely upwards with respect to the plane of the ground (Ps), and
b. a conveyor (10) for products (2) to be palletized located upstream of the robot (4) with respect to the direction of forward travel of the products (2),
**characterized in that**
the interlayer magazine (6) is located downstream of the robot (4) with respect to the direction of forward travel of the products (2), the assembly of conveyor (10)/robot (4)/interlayer magazine (6) being aligned **in that** order, the robot being positioned between the interlayer magazine (6) and the conveyor (10) for products in such a way as to define an alignment in a first direction (D1), this first direction substantially corresponding to the direction of forward travel of the products (2).

2. Palletizing system (8) according to Claim 1, wherein the feed plane (Pa) of the interlayers (3) forms an angle with the plane of the ground (Ps) of between 45 degrees and 90 degrees, preferably substantially equal to 75 degrees.

3. Palletizing system (8) according to Claim 1 or 2, wherein the assembly of magazine/interlayers has a surface area projected onto the ground of which the width with respect to a direction of alignment (D1) between the robot (4) and the interlayer magazine (6) does not exceed the width of a baseplate (14) of the robot (4) with respect to said direction of alignment (D1).

4. Palletizing system (8) according to any one of the preceding claims, wherein the robot (4) comprises a baseplate (14) provided, on at least one side, with a means (20) for referencing pallets (12) at the baseplate (14).

5. Palletizing system (8) according to any one of the preceding claims, wherein the robot (4) comprises a baseplate (14) provided with means for moving the robot (4) relative to the ground.

6. Palletizing system (8) according to any one of the preceding claims, wherein the interlayer magazine (6) is provided with means (24) for moving the magazine (6) relative to the robot (4), such that the interlayer magazine (6) forms a movable carriage.

7. Palletizing system (8) according to Claim 6, wherein the means (24) for moving relative to the robot (4) comprise at least one cavity (26) for receiving a fork of an implement of the fork conveyor type.

8. Palletizing system (8) according to any one of the preceding claims, wherein the interlayer magazine (6) further comprises means (32) for mechanical engagement in the robot (4), and wherein the robot (4) is provided with receiving means (34) capable of cooperating with said mechanical engagement means (32).

9. Palletizing system (8) according to any one of the preceding claims, wherein the interlayer magazine (6) comprises a structure (40) for receiving the interlayers (3), said structure (40) having an upper portion (41) for holding the interlayers (3) in a substantially vertical position, said holding portion (41) defining a plane (P1) parallel to the feed plane (Pa) of the interlayers.

10. Palletizing system (8) according to any one of the preceding claims, wherein the interlayer magazine (6) is provided with at least one stop (48) for referencing the interlayers in a longitudinal direction (D1).

11. Palletizing method implementing a palletizing system (8) according to any one of Claims 1 to 10, by means of a multi-axis robot (4) operating in an freely accessible area, comprising steps essentially consisting in grasping products (2) one after another from a product receiving area and also moving the grasped products (2) and placing them onto a pallet (12) so as to form layers of products, the products (2) being of the box or crate type,
said method being **characterized in that**
it comprises a step consisting in grasping interlayers (3) one after another, said interlayers (3) being of the cardboard sheet type, from an interlayer magazine (6) configured to present the interlayers (3) in a feed plane (Pa) oriented obliquely upwards with respect to the plane of the ground (Ps), and a step consisting in depositing each grasped interlayer (3) onto a layer of products (2) on the pallet (12), in such a way that each interlayer (3) separates two layers of products (2) on the pallet (12), until a full pallet is obtained.
